# EUROPEAN PATENT SPECIFICATION

(11) **EP 3 373 647 B1**
(45) Date of publication and mention of the grant of the patent: **01.07.2020**
(21) Application number: 17305236.6
(22) Date of filing: 06.03.2017
(51) Int. Cl.: H04W 28/16

(54) **ENHANCED NETWORK ACCESS SCHEME**
VERBESSERTES NETZWERKZUGANGSSCHEMA
PROCÉDÉ D'ACCÈS DE RÉSEAU AMÉLIORÉ

(43) Date of publication of application: 12.09.2018
(73) Proprietor: Mitsubishi Electric R&D Centre Europe B.V., 1119 NS Schiphol Rijk Amsterdam (NL); Mitsubishi Electric Corporation, Tokyo 100-8310 (JP)
(72) Inventor: ROLLET, Romain, 35000 Rennes (FR)
(74) Representative: Plasseraud IP

(56) References cited:
- EP-A1- 2 453 705
- US-A1- 2008 107 157
- US-A1- 2013 077 554
- US-A1- 2016 134 456

## Description

The present invention relates to radio communication systems.

In a radio communication system, one of the main tasks of the Medium Access Control (MAC) layer is to provide a channel access control mechanisms in order to share the available radio resource between the different stations that need to communicate. In a packet-mode contention based channel access, the multiple access mechanism is able to detect and reduce data packet collisions. On the contrary, in a circuit-switched channel access method, the multiple access mechanism should reserve resource to establish a logical channel.

Usually, the multiple access mechanism is associated with error control mechanism used to control packet repetition in order to achieve a minimum Quality of Service (QoS) for each established channel. Optimising the global available bandwidth is also one of the main targets of the multiple access mechanism.

Examples of multiple access protocols that are used in packet radio wireless networks are CSMA/CA (used in IEEE802.11 networks), Slotted ALOHA, Dynamic TDMA, Mobile Slotted Aloha, CDMA, etc.

TDMA (Time Division Multiple Access) allows several users to share the same frequency channel by dividing the signal into different time slots. Slots are allocated to a particular device avoiding any radio collision in the cell. A major advantage of TDMA is that the radio part of the mobile only needs to listen and broadcast for its own time slot. Time is usually divided in fixed-duration time frames, each frame being divided into a fix number of slots. A central control, named "access point" or "base station" in some standards, is in charge of slot allocation.

In dynamic time division multiple access, a scheduling algorithm dynamically reserves a variable number of time slots in each frame to variable bit-rate data streams, based on the traffic demand of each data stream. In such systems, it is required to implement some mechanisms so that stations can periodically report their resource needs via some control messages.

However, these mechanisms usually introduce some bandwidth consumption and some delays in packet transmission.

In CSMA/CA (Carrier Sense Multiple Access with Collision Avoidance), no central scheduling is required since each station independently decides whether it can transmit data over the channel. Carrier Cense is used prior to transmitting to detect channel occupancy. When another station is heard, a Collision Avoidance determines the waiting period before listening again for a free communication channel. One drawback of this method is the necessity for the receiver station to hear permanently the channel. For this reason, some algorithms for power saving have been developed to reduce power consumption. Most of them are based on the introduction of time frame of fixed duration signalled by a specific broadcast beacon frame emitted by a central controller. Only communication between the central controller and stations are allowed (i.e. infrastructure mode in IEEE-802.11). Then, stations are awoken only during some specific time frame. Central controller schedules the downlink traffic only during time frame where the destination station is awoken. However, this kind of mechanism requires the station to be awoken and to listen to the channel during one complete time frame instead of just one slot in TDMA.

Existing radio communication protocols optimized for sensors and low-powered devices are based on different access control mechanisms. Zigbee physical and MAC layers are based on IEEE802.15.4 standard. In beacon-mode (i.e. centralized method), it is possible to use a superframe structure that may contain three types of period:
- a "contention access period" (CAP),
- a "Contention-Free period" (CFP) and
- an inactive period.

An access control mechanism for CAP is CSMA/CA based. A TDMA access control with central allocation is used rather for CFP. However, allocation is static and is negotiated upon channel establishment.

Bluetooth Low Energy access control scheme is based on dynamic TDMA but without broadcast beacon emission.To establish a connection, a master first starts scanning to look for advertisers that are currently accepting connection requests. When a suitable advertising slave is detected, the master sends a connection request CONNECT-REQ packet to the slave and, provided the slave responds, establishes a connection. The CONNECT-REQ packet includes the frequency hop increment, which determines the hopping sequence that both the master and the slave will follow during the lifetime of the connection.

In Bluetooth terminology, a connection is simply a sequence of data exchanges between the slave and the master at predefined times. Each exchange is called a connection event. During a connection event, the master and slave alternate sending and receiving packets. The connection event is considered open while both devices continue to send packets.

The maximum number of consecutive exchanged packets is limited to four (4). Between two packet bursts, a connection idle interval must be respected. Because of those limitations, the maximum user throughput is equal to 85kbps for a single connection for some common implementations. The receiver and the transmitter must exchange the same number of packets even for asymmetrical traffic. Such a behavior is not optimal considering the power consumption since the low power device must send empty packet each time one data packet is received.

Current hardware radio modules implement now very efficient sleeping modes that allow reducing the power consumption to several microamperes. However, putting a microprocessor in idle mode still requires more power (several mA for low power devices). Considering the radio module, reception and above all data transmission always require more power (∼ 5 to 20mA) for the best integrated radio system. Transitions between power saving and actives modes require generally some delay because of hardware and software constraints. It induces some overhead in terms of power consumption. This phenomenon shall carefully be considered when designing a multiple access protocol which is not the case of existing methods.

Consequently, there is a need for a dynamic TDMA based multiple access protocol that is optimized for low-powered devices.

The invention aims to improve the situation.

The invention is defined by the appended claims.

This implementation enables a remaining portion of said communicating entities to operate in an energy saving mode during at least a remaining portion of the aforesaid predetermined period, or at least to stay awake during a beacon time window duration (as disclosed relatively to an embodiment detailed below) and remain in a "sleeping" mode during the remaining portion of the predetermined period.

An embodiment of that kind can be found in prior art document US2013/077554.

However, that kind of embodiment does not provide a solution where the communicating entities should be let in the sleeping mode as long as possible and be awaken just for receiving the beacon frame.

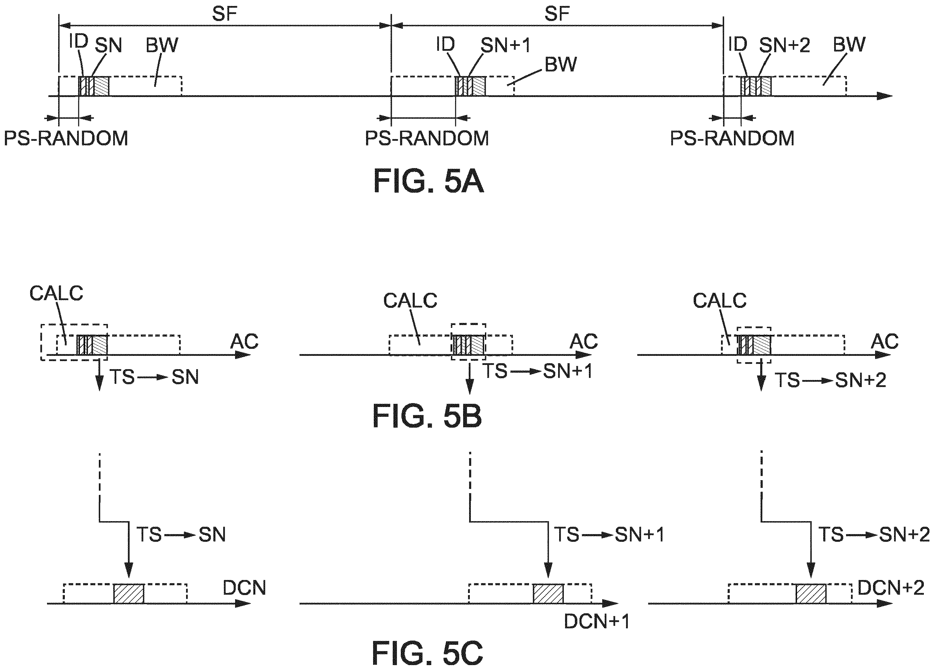

In order to reach this optimum, the invention provides that, the cell controller having an identifier shared with the communicating entities connected to the network, the time for starting transmission of the beacon frame is chosen according to a pseudo-random draw using a seed based at least on the identifier of the cell controller. At least one of the communicating entities uses the same seed so as to calculate the same pseudo-random draw (calculated start time referenced as CALC in figure 5B commented below) for starting listening to the first frequency channel at the time when the transmission of the beacon frame starts.

This embodiment enables thus a communicating entity to operate in an energy saving mode during at least a remaining portion of the aforesaid predetermined period, if no timeslot is intended to it, since the communicating entities know the seed for calculating the pseudo-random draw.

In a possible application of the invention, the cell controller is provided in an automobile vehicle, the network being a wireless network, and the communicating entities are wireless stations connected to sensor devices provided in the automobile vehicle.

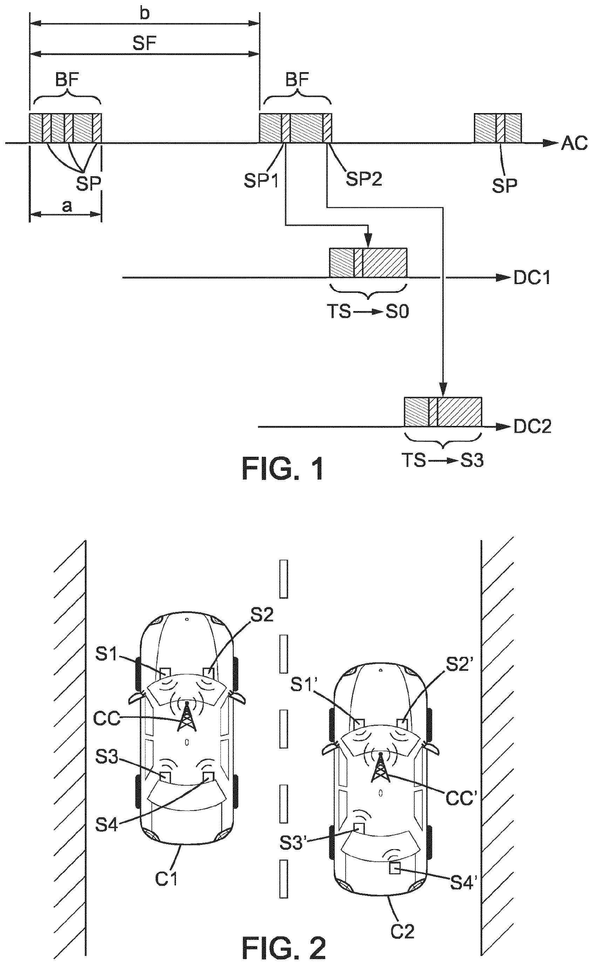

In that kind of application for example, interference may happen when two automobile vehicles having equivalent equipment including a cell controller are adjacent as shown in the example of figure 2 commented below. In order to prevent from interference, the time when the beacon frame starts in the predetermined period can be different from one network managed by a cell controller to another network managed by another cell controller.

In that kind of application but possibly also in any other applications, the aforesaid predetermined period:
- can have a constant duration (corresponding thus to repeated periodic durations each one having a portion during which a beacon frame can be transmitted), and
- can include a beacon time window having also a constant duration (referenced as BW in figure 5A commented below and appearing at the start of the predetermined period SF in the shown example).

The beacon frame transmission can thus start at a time chosen by the cell controller within said beacon time window.

This chosen start time can be defined by the cell controller, for example randomly so as to avoid (or limit the probability) to transmit beacon frames at the same time both with another adjacent cell controller.

In a general embodiment, the beacon frame can comprise data indicating a number of predetermined periods scheduled before a next timeslot is intended again to that communicating entity, enabling therefore that communicating entity to schedule a duration of operation in the energy saving mode.

In an alternative or complementary embodiment, the beacon frame can comprise data indicating:
- at least one identifier of a designated entity to which a timeslot is intended,
- a duration of that timeslot,
- a communication initiation data indicating whether the use of the timeslot starts with a transmission from the designated entity or rather with a transmission from the cell controller.

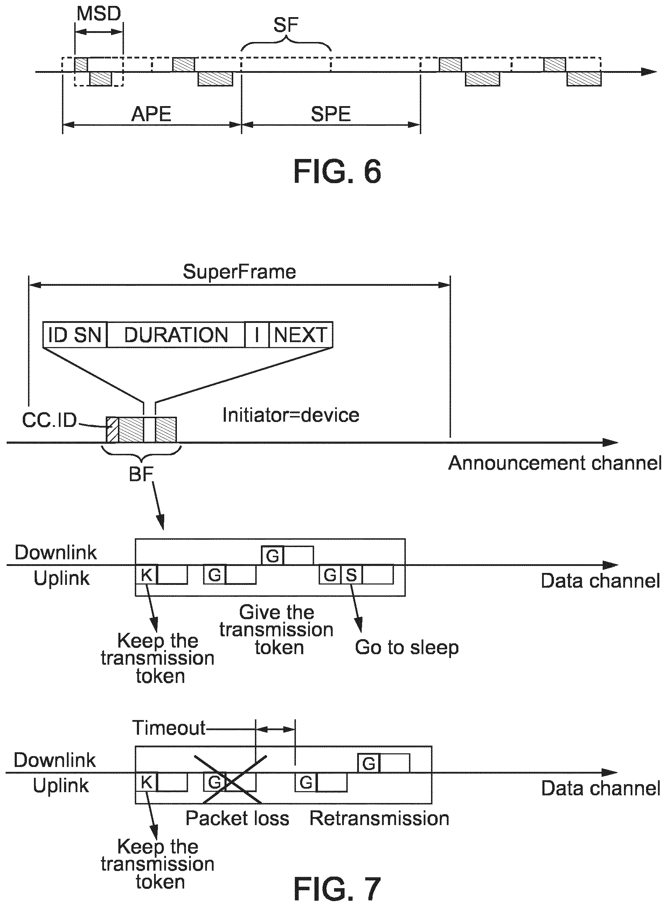

In this embodiment, a token passing mechanism can be contemplated, the first holder of the token being the first transmitter in the timeslot. Therefore, in that embodiment, the communication initiation data can define further a token holder among the cell controller and the designated entity, starting the use of the timeslot with a transmission and passing that token after each performed transmission. That embodiment is detailed below in reference to figure 7.

In a general embodiment, said cell controller having an identifier shared with the communicating entities connected to the network and the entity designated in the beacon frame having an identifier known by the cell controller, the second frequency can be chosen by the cell controller according to a frequency multi-hop scheme where a pseudo-random draw using a seed based at least on the identifier of said cell controller and the identifier of the designated entity determines said second frequency. The designated entity can use also the same seed so as to calculate the same pseudo-random draw for listening to the channel corresponding to the second frequency thus determined.

The present invention aims also at a computer program product, comprising instructions for performing the method as defined above when run by a processor. Such instructions can be distributed between the cell controller and the communicating entities connected to the network.

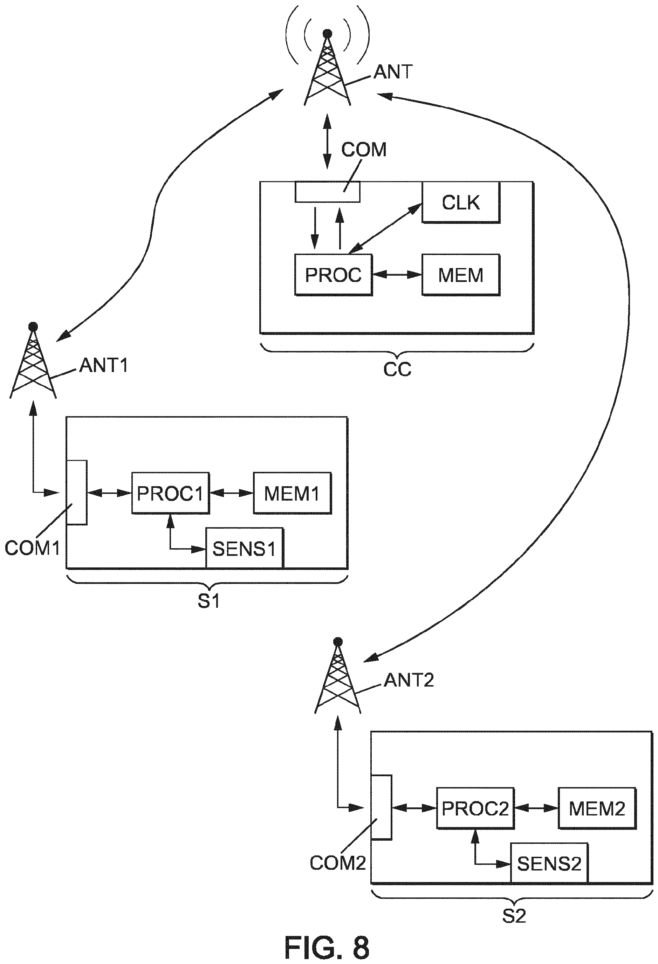

The present invention aims also at a system comprising, as shown on figure 8, a cell controller CC and one or several communicating entities S1, S2, connected to the cell controller through a network, wherein:
- the cell controller CC comprises a computer circuit (including in the exemplary embodiment shown in figure 8, further to an antenna ANT, a processor PROC and a memory MEM storing at least instructions of a computer program product according to the present invention), the computer circuit being configured for implementing the method as defined above and including the beacon frame transmission, and
- each communicating entity S1, S2 comprises a computer circuit (including, further to antennas ANT1, ANT2, a processor PROC1, PROC2 in each circuit, and a memory MEM1 and MEM2 for storing also instructions of the computer program product according to the present invention), the circuit being configured for implementing the method as defined above and including the beacon frame interpretation to use the intended timeslot.

The present invention aims also at a cell controller to be connected to communicating entities through a network, and comprising a computer circuit (as shown in figure 8) configured for:
- scheduling communication timeslots to allocate to said communicating entities, and
- transmitting beacon frames to indicate these timeslots allocation, according to the method presented above.

The present invention aims also at a communicating entity to be connected through a network to a cell controller being able to schedule communication timeslots to allocate to communicating entities of said network. More particularly, the communicating entity according to the invention comprises a computer circuit (as shown in the example of figure 8) configured for:
- receiving beacon frames from said cell controller,
- interpreting these beacon frames to determine whether any future timeslot is intended to be allocated to it, according to the method as presented above,
- and, otherwise, operate in an energy saving mode otherwise, until receiving a next beacon frame.

The present invention is illustrated by way of example, and not by way of limitation, in the figures of the accompanying drawings, in which like reference numerals refer to similar elements and in which:
- figure 1 shows a beacon frame communication and corresponding uses of provided timeslots announced in the beacon frame;
- figure 2 shows an application of the invention to networked automobile vehicles and possible interference between two adjacent networks managed by respective cell controllers CC (connected to stations S1 to S4) and CC' (connected to stations S'1 to S'4);
- figure 3 is a view of the cells C1 and C2 corresponding to the situation of figure 2;
- figure 4 shows beacon windows BW being used for starting the transmission of a beacon frame BF in each super-frame period SF;
- figures 5A to 5C show the pseudo-random determination of the transmission start of the beacon frames BF in each beacon window BW, by the cell controller and also by the communication entities;
- figure 6 shows possibilities of sleeping mode periods for a communicating entity in a system according to an embodiment of the invention;
- figure 7 shows a token passing scheme used in a timeslot for communications between the cell controller and the designated communication entity using that timeslot;
- figure 8 shows schematically a system according to an embodiment of the invention;
- figure 9 shows a summary of steps performed in the method according to a possible embodiment of the invention, and corresponds thus to a flow chart of a general algorithm of a computer program product according to that embodiment of the invention.

It is proposed here a radio communication system based on a central resource allocation scheme (done by a Cell Controller) and supporting TDMA coupled with frequency hopping mechanism for data channels.

Such a system implements a multiple access method protocol that is adapted to the system with ultra-low powered devices.

In order to minimise the aforesaid "listening period" of the devices, the proposed protocol is based on a TDMA scheme with centralised resource allocation. A central node (named hereafter "Cell Controller") is in charge of managing radio resource and shares that resource among different terminal devices (named hereafter "stations") which are attached to the radio cell.

Time is divided into fixed duration called "super-frame" hereafter. A frame (called "beacon frame" or beacon hereafter) is sent by the Cell Controller at the beginning of each super-frame and contains information about time slots allocated on the data channels during the current super-frame.

Using a periodic beacon allows idle stations to sleep during at least a remaining part of each period between two super-frames.

Referring then to figure 1, within each period named super-frame SF, the cell controller sends a beacon frame BF in an announcement channel AC corresponding to a particular frequency fa (or band of frequencies). Each beacon frame BF comprises data related to slot parameters SP. For example, in one beacon frame BF, one timeslot SP1 can be provided to be allocated to station S0 in the data channel DC1 (corresponding to another frequency f1), and another timeslot SP2 will be provided to be allocated to another station S3 in the data channel DC2 (corresponding to another frequency f2).

Therefore, timeslots are resources to be shared in the network.

Thanks to that implementation, the periods during which the stations are to be awaken (and should listen to the cell controller) are, at the most, the duration *a* of one beacon frame, to be compared with the duration b of one super-frame SF (with a/b << 1).

Moreover, as presented in the examples of embodiment detailed below, the stations do not need to exchange data with the cell controller too much often. For example, the station can be a sensor transmitting measurement data to the cell controller, at the most every second, while the whole duration b of the super-frame SF can be for example 100 ms (0,1 second). That kind of situation implies then that such a sensor station has to be awaken during only one beacon frame duration a, over a maximum number of ten SF durations (corresponding therefore to a ratio 0,1xa/b). Therefore, power saving can be improved further.

Therefore, using a periodic beacon allows idle stations to sleep during an arbitrary number of beacons (9 beacons over 10 in the example given above). That arbitrary number can be defined and agreed between the station and the cell controller during an attachment procedure described below.

In the proposed protocol, data time slots are dedicated to a specific station which allows contention-free communication. A slot dedicated to a particular station has a variable length depending on its traffic requirement. A data time slot is exclusively used for this station but support both downlink or uplink transmission thanks to a simple token management scheme shown in figure 7 that is described in details below. Such a scheme simplifies the signalisation and also reduces the energy required for communications in attached stations.

Inside a slot, several data frames can be transmitted by either the cell controller or the station. Each data frame has a variable length, with a MAC header part for control information, and a payload part carrying logical channel information data (i.e. upper layer data).

The system is able to support several data channels that can be mapped over frequency bands different from the announcement channel AC in order to reduce interference with neighbouring cells.

The beacon frame is preferably emitted over a single announcement channel common to every cell in order to facilitate and speed-up the synchronisation to the super-frame for stations at system startup. Attachment to the cell is then done by using a contention based period periodically scheduled inside some super-frames on the announcement channel. During attachment, stations indicate to the cell controller their data traffic requirements, and their power saving constraints so that the cell controller can then schedule efficiently some data slots. Additional resource can be requested by stations by using on-the-band control messages.

Referring now to figure 2, in an example of embodiment, the cell controller CC is a transmitting device which generates a local network especially in an automobile vehicle. Stations S1, S2, S3, S4 connected to the cell controller through that wireless local network (IEEE 802.11 for example) can be, for example, wireless chip sensors being configured to transmit their measurement data (water temperature of the motor, tyre pressure, etc.) to the central cell controller CC so as to monitor the general operation of the vehicle. However, as shown on figure 2, other vehicles having also a wireless local network can be in the vicinity of the cell controller CC. Since it can be chosen to have a same standard channel frequency for the announcement channel AC in all the cell controllers, external interference is then possible.

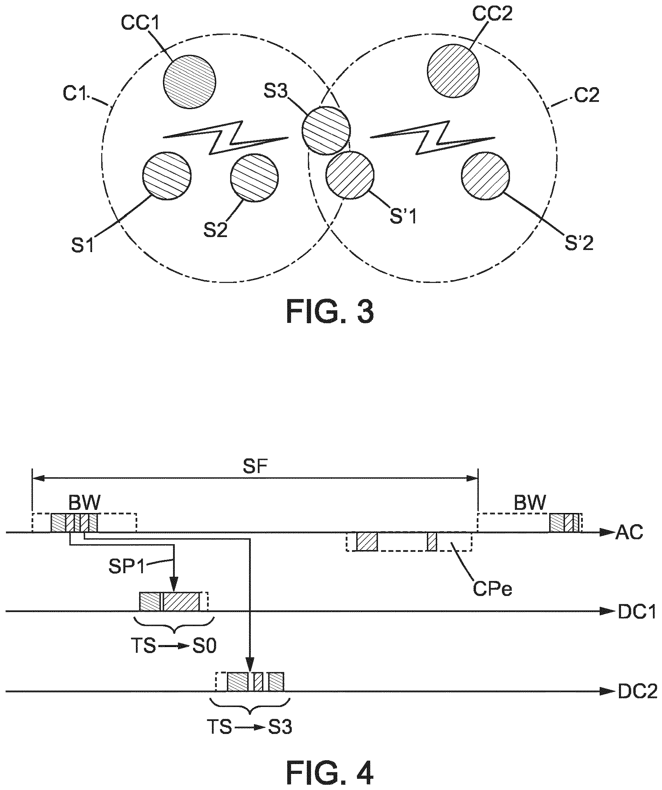

The invention also proposes an optional embodiment providing a mechanism to secure the announcement channel against external interference. Indeed, the proposed multiple access protocol relies on the good reception of the beacon data by the stations. To limit possible beacon collisions between adjacent cells as shown now in figure 3, the beacon is emitted after a random period generated from a pseudo-random sequence known by every stations attached to one same cell controller. To facilitate synchronisation, the beacon is confined inside a time window named "beacon window" as shown in figure 4. In each beacon window BW, the time when the beacon frame BF really starts depends of that pseudo-random sequence, unique to each cell. Since that pseudo-random sequence is different from one cell C1 to another C2, it is very improbable that beacon frames transmitted in two adjacent cells would have an overlap in time.

Furthermore, as already presented above with reference to figure 1, in order to comply with frequency regulation and reduce interference, frequency hopping mechanism can be used for data channels DC1, DC2, etc. Here again, a pseudo-random sequence can be used for frequency hopping as also shown in figure 4.

In order to be robust, the pseudo-random generation for both the beginning of a beacon frame in a beacon window and for the frequency hopping can use a seed which can be derived from values of a cell controller identifier (or "cell ID") and of a station identifier. More particularly, for example, the most significant bits MSB of the sequence number that are advertised in the beacon can use the cell ID as a seed for beacon frame starting information, and next bits can use for seed intended stations identifiers for respective frequencies hoping in respective channels DC1, DC2. Finally, the number of iterations used to calculate the pseudo-random generation number is obtained from the least significant bits LSB of the sequence number, so that less iteration calculation are required when a station shall re-synchronise.

In another embodiment, data channel frequency can be also indicated simply into the beacon like other slot parameters (time offset, duration). For example, the data channel frequency can be chosen by the cell controller according to a frequency multi-hop scheme where a pseudo-random draw determines the data channel frequency allocated to a given station SN. The pseudo-random draw can use typically a seed based again on the identifier ID of the cell controller CC, and also the identifier of the given station SN (and possibly other parameters such as a signal-to-noise ratio for that station and that frequency). Once the data channel frequency is thus determined, a timeslot in that frequency can be assigned to station SN. In case of using the timeslot for receiving data, the given station SN can use again the same seed so as to calculate the same pseudo-random draw for listening to the channel corresponding to the thus determined frequency.

Figure 4 summarises finally the different exposed features of the protocol proposed above. It can be appreciated further that the announcement channel AC can still be used for contention period transmissions CPe, like in the prior art presented in introduction of the present description.

More detailed explanations are given now relatively to the chosen times of beacon frame starts within their respective beacon windows as shown in figure 4.

As explained above with reference to figure 2, it is preferred to protect the announcement channel AC against external interference (external cell of other vehicles). Since the proposed multiple access protocol relies on beacon reception, if for instance an adjacent cell uses the same announcement channel with same frequency, same super-frame period and phase, then all beacon frames may be corrupted for stations located at the border of both cells. Consequently, it would be impossible to communicate with these stations.

As explained before, after the start of the super-frame, a random period is preferably applied before emitting the beacon over the air.

As shown in figure 5A, the beacon shall be emitted within the beacon window, so the maximum delay value inserted before the beacon shall be lower than the beacon window size minus the beacon duration. For the sake of simplification, the beacon window size can be set as a multiple of the mean beacon duration (x4 or x8).

Thanks to this implementation, a sleeping station can awake a very short time just before the beacon emission and it does not lose energy because of its listening to the channel uselessly during a long time. Even if it does not protect against sporadic potential beacon losses due to interference, this embodiment is very effective in preventing from the loss of consecutive beacon frames during a long time.

Furthermore, each beacon frame BF (in a beacon window BW) can be dedicated to at least one predetermined station SN. Referring to figure 5A:
- in the first super-frame SF, a beacon frame BF can be dedicated to the first station SN,
- in a second super-frame SF, a beacon frame BF can be dedicated to a second station SN+1,
- in a third super-frame SF, a beacon frame BF can be dedicated to a third station SN+2.

Referring now to figure 5B, the first station SN calculates the pseudo-random duration PS-RANDOM before the first beacon frame starts and then hears the announcement channel AC after that calculated duration CALC. As detailed below, the first beacon frame dedicated to station SN further includes data related to the next beacon frame intended to that same station SN. Therefore, the station SN is able to know when it should be awaken for receiving next beacon frame data.

Referring now to figure 5C, station N can jump to the data channel DCN to use the timeslot which is specified in the first beacon frame.

The next super-frame SF of figure 5A includes the beacon frame dedicated to the second station SN+1. The same steps are applied by the second station SN+1 (calculation of the pseudo-random duration in the beacon window before the beacon frame starts, hearing the announcement channel after that calculated duration, getting also information about the next beacon frame dedicated to the second station SN+1, jumping to the data channel DCN+1 indicated in the beacon frame so as to use its allocated timeslot). Of course, same steps are performed also by the third station SN+2 for hearing its dedicated beacon frame.

Explanations are given below relatively to station attachment procedure.

Not-attached stations use the contention period to send control messages to the cell controller. The detailed description of the access protocol used inside the contention period is not really part of the invention. The attachment procedure consists on first synchronising on a valid beacon frame and then exchanging request/response control frames using the contention based period. Some different parameters are exchanged between the cell controller and the station to specify the required traffic profile but also for security authentication purpose.

Each station may open different unidirectional logical data channels. Each logical data channel has a specific traffic profile. It contains some parameters used to characterize the required bandwidth for that channel. For instance, the traffic profile (constant bit-rate (CBR) profile) can contain only a mean bitrate parameter.

A logical channel is mapped over a mixed time slot thanks to data frame. A single time slot may carry several logical channels since several data frame can be exchanged inside a time slot. The logical channel number is signalled inside the MAC header of every transmitted data frame.

The station traffic profile can contain some common parameters to every logical channel that shall be considered by the scheduling process when allocating resource. In particular, referring to figure 6, it may contain:
- An active period duration APE (expressed as a number of super-frames)
- Used data rate/physical layer parameters
- A sleeping period duration SPE (expressed as a number of super-frames)
- Maximum slot duration MSD during one super-frame

The number of opened logical channel can change according to the station requirements. For instance, a very simple sensor that sends a 8bits value every second can only use one uplink data channel, plus two control channels (uplink/downlink) that are implicitly opened. The mean bit rate of the logical data channel is then set to 8bit/s. The active period of the station is one super-frame, while the sleeping period will be 99 considering here a 10ms super-frame.

More advanced and complex profile can be defined alternatively but, for basic sensor, the constant bit-rate (CBR) profile looks like the most adapted.

Data slot use is detailed hereafter.

In order to reduce the energy required for communications, it is preferred to group the downlink (DL) and uplink (UL) data frame communications of a single same station in one time slot duration. Indeed, once transmission and reception operations are performed, the station can immediately move to a deep sleep state. Such a step may take a rather long time compared to the transmission/reception and sleeping times: it is valuable only if the sleeping time period is longer. In order to reduce also power consumption, the system supports variable frame length avoiding the usage of padding data. Furthermore, because of the use of different traffic profile for each station, the super-frame composition may differ from one super-frame to another. Consequently, it is preferred to efficiently signal the length and time position of each time slots dedicated to the different active stations inside the beacon frame. To reduce the signalling weight, only the slot duration expressed in time quantum is indicated. Time quantum value is either known implicitly or signalled into the beacon. Time quantum represents the smallest time granularity and shall be carefully set in order to reduce the signalling field lengths. For instance, it can be fixed to the time required to transmit one byte if the frame granularity is also one byte. It can induce some bandwidth losses due to lack of granularity to signal inter-frame period (turn-around time, data processing time, etc.) but it can be considered as acceptable to favour energy saving against global performance in one embodiment of such a simple system.

Each allocated slot is described inside the beacon by a resource allocation descriptor (RAD) commented in the table below. Two consecutive time slots are separated by the inter-slot period that shall be greater to the inter-frame period and the turn-around time. The inter-slot period, inter-frame period and turn-around time durations are implicitly defined or are signalled inside the beacon.

The RAD includes the following information:

| | |
|---|---|
| Station ID | Identifier of the station for which the time slot is dedicated |
| Slot Duration | Time duration of the slot expressed in time quantum |
| Initiator | Indicates whether the first frame is emitted by the cell controller (DL frame) or rather the station (UL frame) |
| Next schedule | Indicate how many super-frames before next time slot scheduling. It will help the station to fix its sleeping period. |

DL and UL data frames are then combined inside the same time slot allowing fast communication between stations and the cell controller. Indeed, this mechanism reduces the round-trip time since a pair can immediately answer to a request issued in a time slot, providing enough resource allocated by the cell controller, and the receiver has sufficient time to process the request. For simple device stations such as sensors, this assumption can be done since the protocol stack is often simplified and data packets are immediately processed by the station. Typically, in the example of application above, the cell controller can ask some sensor device stations for measurement data according to a polling mode, and get the measurement data within a same time slot, and then further send to the stations an acknowledgement.

Combining DL and UL data frame in a single time slot also participates to reduce the signalling overhead and resource allocation complexity since only one type of time slot is allocated to each station and can be used for any purpose. One or many data frames can be emitted by the cell controller (downlink data frame) or the stations (uplink data frame) up to the end of the allocated time slot.

A token can be further used to determine which pair is allowed to transmit. The initiator (i.e. the token owner) is indicated in the beacon (initiator indicator), as shown in figure 7 detailed below. An indication in the header of each transmitted data frame informs the receiver whether the transmitter keeps the token to continue transmission, or gives it to the receiver so that this later has the opportunity to send a frame. A second indication in the header of the uplink frame informs the cell controller that the station is moving to the sleeping state after the frame emission, and so the communication is suspended up to the next scheduled time slot indicated in the RAD.

Between two consecutive frame emissions, a minimum inter-frame period shall be respected by the emitter to give the opportunity to the receiver to decode and process the frame. This period can be adapted according to each station and is announced during the attachment procedure with each station.

Figure 7 details the frame emission procedure inside a time slot. The first token owner is specified inside the RAD thanks to the Initiator field (reference I of figure 7). Then, in each transmitted frame, the transmitter can decide whether it keeps (K flag) or gives (G flag) the token to the receiver. The communication is suspended when the time slot is full or when the station indicates that it is going to sleep after the frame transmission. A timer is started when a frame with a G flag set is transmitted. If no frame is received before the time expires, then the frame is considered as not received correctly by the receiver. In that case, the original transmitter keeps the token and is able to transmit again a new frame. It may repeat then the lost frame, but also transmit a new one carried on a different logical channel.

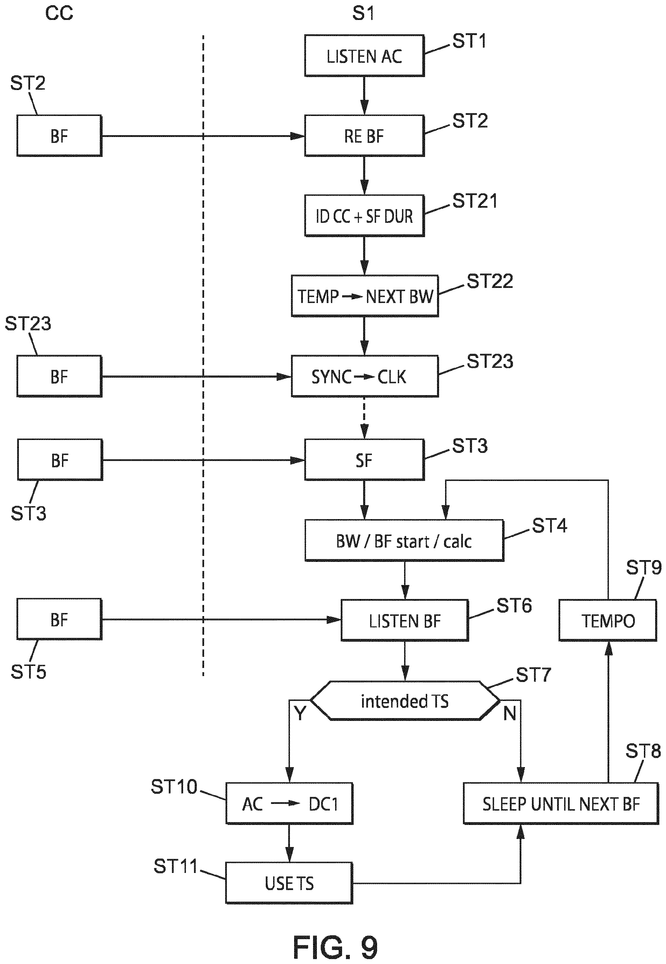

Referring now to figure 9 illustrating a summary of principal steps of the method presented above, when a station S1 connects to the network, it listens for the announcement channel at step ST1 and it pre-synchronizes on a first beacon frame BF received at step ST2 from which it gets the identifier ID of the cell controller at step ST21, and the information of the super-frame duration SF (indicated in the beacon frame in the present example of embodiment). Knowing the predetermined super-frame period SF, the station can roughly determine the starting of the next super-frame SF. The starting of this super-frame SF defines also the starting of the next beacon windows BW. Therefore, in step ST22, the station S1 can wait for the next beacon window BW (during a temporization TEMP corresponding to a super-frame duration SF minus a beacon window duration for example). Upon reception of the next beacon frame BF, station S1 can acquire the network clock CLK held by the cell controller CC by accurately synchronizing on the secondly received beacon frame at step ST23.

Thanks to that clock CLK, the station can precisely synchronize and determine the starting of the next super-frames SF (the aforesaid predetermined periods) in step ST3. Thanks to the cell controller identifier data, the station can calculate the accurate time when the beacon frame BF is transmitted in step ST4, and then listen at step ST6 to the announcement channel AC at that time to get the beacon frame data sent from the cell controller at step ST5.

In step ST7, based on the beacon frame data, the station can determine whether a timeslot TS is intended to it. If yes (arrow Y), then the station switches to data channel DC1 in step ST10 to start communication with the cell controller using thus its timeslot TS at step ST11. Otherwise (arrow N), the station can sleep in an energy saving mode at step ST8 during a temporization at step ST9. If station S1 is newly attached to the cell controller, that temporization may correspond to a single super-frame duration until a future beacon frame indicates how many super-frames can lapse before a next timeslot is intended to that station S1. Therefore, in this case, the temporization will correspond to all of these super-frames durations.

Finally, the invention makes it possible to achieve one or several of the following items:
- Minimizing the number of transmissions operated by low-powered devices;
- Minimizing the number of control messages (request for slot in uplink, acknowledgment);
- Minimizing the channel listening durations (in reception mode);
- Allowing variable bitrate to adapt to a multiplicity of devices with different communication requirements;
- Being robust against external interference to minimize the number of repetitions (in particular, supporting coexistence with external cells operating similar or different multiple access protocol in the same frequency bands);
- Minimizing packet transmission delay and round trip time.

The proposed invention can be deployed in "internet of things" communication systems for automobile, home, office, facilities applications or factory automation environment. It is compatible with ultra-low powered devices powered by small batteries or energy harvesting system. It can also be advantageous to deploy completely wireless sensors or devices in some specific environment that does not support wires, or to reduce designing, manufacturing and maintenance costs.

## Claims

1. A method for assigning timeslots to communicating entities connected to a time division multiple access network, said network being delimited in a cell controlled by a cell controller, the method comprising the steps repeatedly implemented by computer means of said cell controller:
- transmitting within a predetermined period, SF, a beacon frame, BF, in a first frequency channel AC to announce to at least one designated entity among said communicating entities that a timeslot is intended to be assigned to said designated entity in a second frequency channel DC1, DC2, and
- assigning said timeslot to said designated entity in said second frequency channel DC1, DC2, And wherein, said cell controller having an identifier shared with the communicating entities connected to said network, the time for starting transmission of the beacon frame is chosen according to a pseudo-random draw, PS-RANDOM, using a seed based at least on the identifier of said cell controller, and wherein at least one of the communicating entities uses the same seed so as to calculate the same pseudo-random draw, CALC, for starting listening to the first frequency channel at the time when the transmission of the beacon frame starts, enabling thus said communicating entity to operate in an energy saving mode during at least a remaining portion of said predetermined period SF, if no timeslot is intended to said communicating entity.

2. The method of claim 1, wherein said cell controller CC is provided in an automobile vehicle, said network being a wireless network, and said communicating entities are wireless stations connected to sensor devices provided in the automobile vehicle.

3. The method according to anyone of claims 1 and 2, wherein said predetermined period SF has a constant duration and includes a beacon time window having a constant duration, and wherein the beacon frame transmission starts at a time chosen by the cell controller within said beacon time window.

4. The method according to anyone of the precedent claims, wherein the beacon frame comprises data indicating a number of predetermined periods SF scheduled before a next timeslot is intended again to said communicating entity, enabling said communicating entity to schedule a duration of operation in said energy saving mode.

5. The method according to anyone of the precedent claims, wherein the beacon frame comprises data indicating:
- at least one identifier of a designated entity to which a timeslot is intended,
- a duration of said timeslot,
- a communication initiation data indicating whether the use of the timeslot starts with a transmission from the designated entity or rather with a transmission from the cell controller.

6. The method according to claim 5, wherein the communication initiation data defines further a token holder among the cell controller and the designated entity, starting the use of the timeslot with a transmission and passing said token after each performed transmission.

7. The method according to anyone of the precedent claims, wherein, said cell controller having an identifier shared with the communicating entities connected to said network and said designated entity having an identifier known by the cell controller, the second frequency DC1, DC2 is chosen by the cell controller according to a pseudo-random draw using a seed based at least on the identifier of said cell controller and the identifier of the designated entity, and wherein the designated entity uses the same seed so as to calculate the same pseudo-random draw for listening to the channel corresponding to the second frequency thus determined.

8. A system comprising a cell controller and one or several communicating entities connected to the cell controller through a network, wherein the cell controller and the one or several communicating entities are configured to implement the respective steps of the method as claimed in any of the precedent claims 1-7.

9. A cell controller configured to implement the respective steps of the method of any of claims 1 to 7.

10. A communicating entity configured to implement the respective steps of the method of any of claims 1 to 7.

11. A computer program product, comprising instructions which, when executed by a processor, cause the processor to perform the method as claimed in any of claims 1 to 7.

## Patentansprüche

1. Verfahren zum Zuweisen von Zeitschlitzen für Kommunikationseinheiten, welche mit einem Time-Division-Multiple-Access-Netzwerk verbunden sind, wobei das Netzwerk in einer Zelle begrenzt ist, welche durch eine Zellensteuerung gesteuert wird, wobei das Verfahren die durch Computermittel der Zellensteuerung wiederholt implementierten, folgenden Schritte umfasst:
- Übertragen, innerhalb eines vorbestimmten Zeitraums, SF, eines Beacon-Frame, BF, in einem ersten Frequenzkanal, AC, um wenigstens einer designierten Einheit unter den Kommunikationseinheiten anzukündigen, dass angedacht ist, dass ein Zeitschlitz der designierten Einheit in einem zweiten Frequenzkanal, DC1, DC2, zugewiesen wird, und
- Zuweisen des Zeitschlitzes der designierten Einheit in dem zweiten Frequenzkanal, DC1, DC2,
und wobei die Zeit zum Starten der Übertragung des Beacon-Frame, wobei die Zellensteuerung eine mit den Kommunikationseinheiten, welche mit dem Netzwerk verbunden sind, geteilte Kennung aufweist, unter Verwendung einer wenigstens auf der Kennung der Zellensteuerung basierenden Seed gemäß einer pseudozufälligen Auslosung ausgewählt wird, PS-RANDOM, und wobei wenigstens eine der Kommunikationseinheiten die gleiche Seed verwendet, um die gleiche pseudozufällige Auslosung zu berechnen, CALC, zum Starten eines Anhörens des ersten Frequenzkanals zu der Zeit, wenn die Übertragung des Beacon-Frame beginnt, wodurch der Kommunikationseinheit ermöglicht wird, während wenigstens eines verbleibenden Abschnitts des vorbestimmten Zeitraums, SF, in einem Energiesparmodus zu arbeiten, wenn kein Zeitschlitz für die Kommunikationseinheit angedacht ist.

2. Verfahren nach Anspruch 1, wobei die Zellensteuerung, CC, in einem Automobilfahrzeug bereitgestellt ist, wobei das Netzwerk ein drahtloses Netzwerk ist und die Kommunikationseinheiten drahtlose Stationen sind, welche mit in dem Automobilfahrzeug bereitgestellten Sensorvorrichtungen verbunden sind.

3. Verfahren nach einem der Ansprüche 1 und 2, wobei der vorbestimmte Zeitraum, SF, eine konstante Dauer aufweist und ein Beacon-Zeitfenster mit einer konstanten Dauer aufweist und wobei die Beacon-Frame-Übertragung zu einer durch die Zellensteuerung innerhalb des Beacon-Zeitfensters ausgewählten Zeit beginnt.

4. Verfahren nach einem der vorhergehenden Ansprüche, wobei der Beacon-Frame Daten umfasst, welche eine Anzahl vorbestimmter Zeiträume, SF, angeben, welche geplant sind, bevor wieder ein nächster Zeitschlitz für die Kommunikationseinheit angedacht ist, was der Kommunikationseinheit ermöglicht, eine Betriebsdauer in dem Energiesparmodus zu planen.

5. Verfahren nach einem der vorhergehenden Ansprüche, wobei der Beacon-Frame Daten umfasst, welche angeben:
- wenigstens eine Kennung einer designierten Einheit, für welche ein Zeitschlitz angedacht ist,
- eine Dauer des Zeitschlitzes,
- Kommunikationsinitiationsdaten, welche angeben, ob die Verwendung des Zeitschlitzes mit einer Übertragung von der designierten Einheit bzw. mit einer Übertragung von der Zellensteuerung beginnt.

6. Verfahren nach Anspruch 5, wobei die Kommunikationsinitiationsdaten ferner einen Token-Träger unter der Zellensteuerung und der designierten Einheit definieren, welcher die Verwendung des Zeitschlitzes mit einer Übertragung beginnt und das Token nach jeder durchgeführten Übertragung durchlässt.

7. Verfahren nach einem der vorhergehenden Ansprüche, wobei die zweite Frequenz, DC1, DC2, wobei die Zellensteuerung eine mit den Kommunikationseinheiten, welche mit dem Netzwerk verbunden sind, geteilte Kennung aufweist und die designierte Einheit eine der Zellensteuerung bekannte Kennung aufweist, unter Verwendung einer wenigstens auf der Kennung der Zellensteuerung und der Kennung der designierten Einheit basierenden Seed gemäß einer pseudozufälligen Auslosung ausgewählt wird, und wobei die designierte Einheit die gleiche Seed verwendet, um die gleiche pseudozufällige Auslosung zu berechnen, zum Anhören des Kanals, welcher der so bestimmten zweiten Frequenz entspricht.

8. System, umfassend eine Zellensteuerung und eine oder mehrere Kommunikationseinheiten, welche durch ein Netzwerk mit der Zellensteuerung verbunden sind, wobei die Zellensteuerung und die eine oder die mehreren Kommunikationseinheiten dazu eingerichtet sind, die jeweiligen Schritte des wie in einem der vorhergehenden Ansprüche 1-7 beanspruchten Verfahrens zu implementieren.

9. Zellensteuerung, welche dazu eingerichtet ist, die jeweiligen Schritte des Verfahrens nach einem der Ansprüche 1 bis 7 zu implementieren.

10. Kommunikationseinheit, welche dazu eingerichtet ist, die jeweiligen Schritte des Verfahrens nach einem der Ansprüche 1 bis 7 zu implementieren.

11. Computerprogrammprodukt, umfassend Anweisungen, welche, wenn sie von einem Prozessor ausgeführt werden, den Prozessor veranlassen, das wie in einem der Ansprüche 1 bis 7 beanspruchte Verfahren durchzuführen.

## Revendications

1. Procédé permettant d'assigner des intervalles de temps à des entités en communication connectées à un réseau d'accès multiple par répartition dans le temps, ledit réseau étant délimité dans une cellule commandée par un dispositif de commande de cellule, le procédé comprenant les étapes mises en œuvre de manière répétée par des moyens informatiques dudit dispositif de commande de cellule :
- la transmission dans une période, SF, prédéterminée d'une trame balise, BF, dans un premier canal de fréquence, AC, pour annoncer à au moins une entité désignée parmi lesdites entités en communication qu'un intervalle de temps est destiné à être assigné à ladite entité désignée dans un second canal de fréquence, DC1, DC2, et
- l'assignation dudit intervalle de temps à ladite entité désignée dans ledit second canal de fréquence, DC1, DC2,
et dans lequel, ledit dispositif de commande de cellule ayant un identificateur partagé avec les entités en communication connectées audit réseau, le moment pour commencer une transmission de la trame balise est choisi conformément à un tirage pseudo-aléatoire, PS-RANDOM, en utilisant une graine basée au moins sur l'identificateur dudit dispositif de commande de cellule, et dans lequel au moins une des entités en communication utilise la même graine de manière à calculer le même tirage pseudo-aléatoire, CALC, pour commencer à écouter le premier canal de fréquence au moment où la transmission de la trame balise commence, permettant ainsi à ladite entité en communication de fonctionner dans un mode d'économie d'énergie durant au moins une partie restante de ladite période, SF, prédéterminée, si aucun intervalle de temps n'est destiné à ladite entité en communication.

2. Procédé selon la revendication 1, dans lequel ledit dispositif de commande de cellule, CC, est prévu dans un véhicule automobile, ledit réseau étant un réseau sans fil, et lesdites entités en communication sont des stations sans fil connectées à des dispositifs capteurs prévus dans le véhicule automobile.

3. Procédé selon l'une quelconque des revendications 1 et 2, dans lequel ladite période, SF, prédéterminée a une durée constante et inclut une fenêtre de temps de balise ayant une durée constante, et dans lequel la transmission de trame balise commence à un moment choisi par le dispositif de commande de cellule dans ladite fenêtre de temps de balise.

4. Procédé selon l'une quelconque des revendications précédentes, dans lequel la trame balise comprend des données indiquant un nombre de périodes, SF, prédéterminées planifiées avant qu'un intervalle de temps suivant ne soit destiné à nouveau à ladite entité en communication, permettant à ladite entité en communication de planifier une durée de fonctionnement dans ledit mode d'économie d'énergie.

5. Procédé selon l'une quelconque des revendications précédentes, dans lequel la trame balise comprend des données indiquant :
- au moins un identificateur d'une entité désignée à laquelle un intervalle de temps est destiné,
- une durée dudit intervalle de temps,
- des données d'initiation de communication indiquant si l'utilisation de l'intervalle de temps commence par une transmission à partir de l'entité désignée ou plutôt par une transmission à partir du dispositif de commande de cellule.

6. Procédé selon la revendication 5, dans lequel les données d'initiation de communication définissent en outre un possesseur de jeton parmi le dispositif de commande de cellule et l'entité désignée, commençant l'utilisation de l'intervalle de temps par une transmission et passant ledit jeton après chaque transmission mise en œuvre.

7. Procédé selon l'une quelconque des revendications précédentes, dans lequel, ledit dispositif de commande de cellule ayant un identificateur partagé avec les entités en communication connectées audit réseau et ladite entité désignée ayant un identificateur connu par le dispositif de commande de cellule, la seconde fréquence, DC1, DC2, est choisie par le dispositif de commande de cellule conformément à un tirage pseudo-aléatoire en utilisant une graine basée au moins sur l'identificateur dudit dispositif de commande de cellule et l'identificateur de l'entité désignée, et dans lequel l'entité désignée utilise la même graine de manière à calculer le même tirage pseudo-aléatoire pour écouter le canal correspondant à la seconde fréquence ainsi déterminée.

8. Système comprenant un dispositif de commande de cellule et une ou plusieurs entités en communication connectées au dispositif de commande de cellule par le biais d'un réseau, dans lequel le dispositif de commande de cellule et les une ou plusieurs entités en communication sont configurés pour mettre en œuvre les étapes respectives du procédé selon l'une quelconque des revendications précédentes 1 à 7.

9. Dispositif de commande de cellule configuré pour mettre en œuvre les étapes respectives du procédé selon l'une quelconque des revendications 1 à 7.

10. Entité en communication configurée pour mettre en œuvre les étapes respectives du procédé selon l'une quelconque des revendications 1 à 7.

11. Produit programme d'ordinateur, comprenant des instructions qui, lorsqu'elles sont exécutées par un processeur, amènent le processeur à mettre en œuvre le procédé selon l'une quelconque des revendications 1 à 7.
